# EUROPEAN PATENT SPECIFICATION

(11) **EP 2 809 149 B1**
(45) Date of publication and mention of the grant of the patent: **04.11.2015**
(21) Application number: 13705023.3
(22) Date of filing: 28.01.2013
(51) Int. Cl.: A01J 5/04

(54) **MILKING SYSTEM**
MELKSYSTEM
SYSTÈME DE TRAITE

(30) Priority: 31.01.2012 NL 2008203
(43) Date of publication of application: 10.12.2014
(73) Proprietor: Lely Patent N.V., 3147 PA Maassluis (NL)
(72) Inventor: VAN DORP, Michiel Adriaan, 3147 PA Maassluis (NL); CROES, Veronica Clara Ignatia, 3147 PA Maassluis (NL)
(74) Representative: Jennen, Peter Leonardus Hendricus
(86) International application number: PCT/NL2013/050044
(87) International publication number: WO 2013/115641

(56) References cited:
- WO-A1-85/03409

## Description

The present invention relates to a milking system, in particular a milking system comprising a milking means, a milk container operatively connected to the milking means, a milk line operatively connected to the milk container, a milk pump operatively connected to the milk line. Herein, the milking means is arranged to extract milk from a dairy animal in a milking and store milk from said milking temporarily in the milk container, and the milk pump is arranged to pump the milk from said milking from the milk container through the milk line, e.g. to a milk tank. Such milking machines are in wide-spread use, see e.g. WO-A-85/03409. Note that the tank, which is an optional part, though in wide-spread use, serves for somewhat longer term storage, such as until a milk collecting truck arrives to collect the milk from the tank. Alternatively, the milk is fed directly to animals, without storing in a tank, or it is guided away to the sewer, in case of unsuited milk. The milking system also comprises a sampling system operatively connected to the milk line via a sample line and comprising a sampling pump and a milk analysis device. Such a sampling system, again well-known in the field, serves to gain substantially on-line knowledge about the milk quality, which is useful in herd management.

Such milking systems suffer from a disadvantage in practice. It turns out that the sampling system does not always function reliably and/or quickly enough, at least not without requiring complex or heavy-duty parts.

It is an object of the invention to overcome at least one of the above mentioned drawbacks, in particular to provide such a milking system with a sampling system, that is able to function more reliably and/or more quickly.

This object is achieved at least partly with a milking system according to claim 1, in particular a milking system, comprising a milking means, a milk container operatively connected to the milking means via a milk line , a milk pump operatively connected to the milk container, wherein the milking means is arranged to extract milk from a dairy animal in a milking and store milk from said milking temporarily in the milk container, wherein the milk pump is arranged to pump the milk from said milking from the milk container through a first part and a second part of a milk line, e.g. to a milk tank, and a sampling system operatively connected to the milk line via a sample line and comprising a sampling pump and a milk analysis device, wherein the milk pump comprises a positive displacement pump arranged to be operable to pump the milk from said milking by alternating between a pump stroke and a rest stroke, wherein the sampling system is arranged to be or be brought in an active state for acquiring via the sample line a milk sample of the milk from said milking during at least a part of one or more rest strokes during the pumping of the milk of said milking, and to be or be brought in a resting state for not acquiring a milk sample of the milk from said milking during substantially the full length of all pump strokes during the pumping of the milk of said milking.

In the above, the milk pump is arranged to pump the milk from said milking by, preferably repeatedly, alternating between a pump stroke and a rest stroke, although it is of course possible that there is only milk for one pump stroke. A pump stroke is taken to be the pump action of expelling milk from the pump, into the desired direction, in most cases into a downstream part of a milk line, towards a milk tank, a sewer, a milk feeding device or the like. Similarly, a rest stroke is the pump action in which milk is allowed to flow or be sucked into the pump, for subsequent pumping. It is noted that a pump stroke will cause a higher pressure in the downstream milk line, which pressure will vary in most cases. Contrarily, the pressure in the downstream milk line will hardly vary, and will be substantially equal to atmospheric or any other basic pressure, during the rest stroke.

The invention uses the above insight to prevent exposing any sensitive equipment, such as a sample pump, to unnecessarily high pressures. Put more briefly, the sampling device samples the milk during (a) rest stroke(s), and does not sample during pump strokes. This allows the sampling device, in particular the sample pump, to work under similar conditions, at least in principle and substantially. For there will be a much less varying pressure in the milk line, and thus the sample line, during the rest strokes in comparison with the pressure during the pump stroke, which ensures a more constant functioning of the sample pump, e.g. ensuring a more constant sample volume extracted. Furthermore, since that pressure is also much lower than the pressure during the pump stroke, or even atmospheric or pressureless, the sampling system will prove more reliable as it does not have to withstand higher pressures, such as up to several bar, during functioning. This makes it possible to achieve a longer reliable life of the sampling system. Furthermore, it is noted that it would be possible to activate the sampling system only after the last pump stroke for that milking, which would of course also provide a pressureless environment. However, this situation is explicitly disclaimed, as it suffers from the drawback that pumping the milk from the milking *and* sampling as a whole takes more time, when compared to sampling at least partially *during* pumping the milk from the milking. After all, sampling is performed at least partially in between two pump strokes. Note that it may be possible that there is not enough milk for there to be more than one pump stroke, e.g. after a milking that was aborted soon after it started. However, it is important to realise that the present milking system is *arranged* to sample at least partially in between pump strokes, and will do so if there is more milk in the milking than can be pumped away with one pump stroke.

It is remarked that here that WO2007/149036 discloses the use of a centrifugal pump as a milk pump. Such a pump differs from the milk pump of the present invention, in that there are no particular pump strokes and rest strokes, with a pumping pressure, no pump pressure, respectively, in the milk line. Furthermore, the document teaches that it is advantageous to transport a minor flow, i.e. a sample flow, at least partly simultaneously with the transportation of the main flow, i.e. during pumping by the milk pump. This effectively teaches away from sampling during a rest (stroke) during pumping. Furthermore, there is no sample pump in this document. In all, the presently solved problem is not disclosed nor solved in the prior ar document.

It is furthermore remarked that obviously present parts, such as a box to retain a milking animal during milking, and so on, are deemed implicitly present. Furthermore, the milking means naturally comprise a control unit, such as a computer or a PCB, for controlling at least the milking means during milking. It can be said that such control unit may also be arranged to control any part and/or step, such as the milk pump and the sampling system, as present in the present invention, although it is also possible to provide a separate control unit for controlling such a part or step. In particular, there may be provided a separate control unit arranged to control the sampling system, which separate control unit may be arranged to communicate with other control units, such as the control unit for the milking means. The present invention is particularly suited with robotic milking means, although the milking system may also comprise or have only conventional milking means.

In particular embodiments, the sample line is connected to the milk line downstream of the milk pump, i.e. at the high pressure side of the milk pump, or in other words the milk pump is provided between the milk container and the sample line. This ensures that milk for sampling will be present in the milk line after each pump stroke. Furthermore, in the case in which the sampling system is arranged to use a sampling reagent for sampling the milk sample, this has the advantage that there is always either atmospheric pressure or a higher pressure in the milk line part connected to the sample line. This makes it possible to ensure that sampling reagent is not sucked back towards the milk line without special measures.

It is also possible to provide said connection at the upstream part, i.e. between the milk container, or milk jar, and the milk pump. In that case, however, there will be a varying pressure during the rest strokes, i.e. the intake strokes, while there will be a non-pressurised first milk line part during pump strokes. Then, the invention as claimed in claim 1 will have as its last feature that the sampling system is arranged to be or be brought in an active state for acquiring via the sample line a milk sample of the milk from said milking during at least a part of one or more pump strokes during the pumping of the milk of said milking, and to be or be brought in a resting state for not acquiring a milk sample of the milk from said milking during substantially the full length of all rest strokes during the pumping of the milk of said milking. This embodiment has a drawback that there may be a negative pressure during the rest stroke, that might suck previous sample milk or, even worse, sampling reagent into the milk line, and is therefore not the most preferred embodiment.

In embodiments of the present invention, the sample pump is arranged to be or be brought in a rest state during substantially the full length of all pump strokes during the pumping of the milk of said milking, and to be or be brought in a pumping state during at least a part of one or more rest strokes during the pumping of the milk of said milking. By bringing the sample pump in a rest state, it is less vulnerable to the higher pressure, during a pump stroke of the milk pump, since its movable parts will not move during said pump strokes. Herein, the "pumping state" is a state to pump the milk sample from the milk line via the sample line to the milk analysis device.

In a particular milking system according to the invention, the sampling system comprises a controllable valve provided in the sample line between the milk line and the sample pump, and arranged to be or be brought in a closed state, that closes off the sample line, during substantially the full length of all pump strokes during the pumping of the milk of said milking, and to be or be brought in an open state, that leaves open the sample line, during at least a part of one or more rest strokes during the pumping of the milk of said milking. Herein, the controllable valve is provided between the milk line and the sampling system, or at least the sample pump thereof. By the provision of such a valve, the sampling system, or at least the parts downstream of the valve, such as in particular the sample pump and the milk analysing unit, can be optimally protected against any high pressure from the pump strokes. To do so, the controllable valve, or sample valve, should be closed during all of the pump strokes, while they should be open during the period of time designated for taking a sample. During this designated time, the sample pump will pump off a milk sample from the milk line, up to a maximum time period during substantially all of the rest strokes. Of course, the sample pump may also be active for a shorter time, depending on how large a sample is required. On the other hand, it is also possible to have the sample pump be active all of the time, or at least during all the rest strokes, while the controllable valve determines the time frames for taking a sample. Depending on the type of sample pump, such an operation is allowed without harm to the sample pump, while it may simplify control, as controlling a valve may be simpler and/or cause less wear than controlling the sample pump. It is noted that a combination of the two functions, i.e. closing the controllable valve/shutting off the sample pump versus opening the controllable valve/operating the sample pump, is also a useful possibility, with the advantage of the least chance of leakage and the shortest total operating time of the sample pump.

As already mentioned before, in particular embodiments, the milking system according to the invention, further comprises a control unit for controlling the sampling system as a whole, in particular the sample pump and/or the sample valve. Such a control is for controlling the function of the sample pump and/or the closing and opening of the controllable valve, but could also be used for the milk analysing step(s). Preferably, the milking system comprises a milk pump controller arranged to control the milk pump and to provide a state signal indicating the pump stroke and the rest stroke of the milk pump. As mentioned before, such a milk pump controller will be part of most milking means. The form of the signal may be many, such as a pulse to indicate a changing from a pump stroke to a rest stroke, or a high/low signal, indicating pump stroke or rest stroke, and so on. Such a milk pump controller may be arranged to communicate with the control unit for controlling the sampling unit. All control units could also be part of one overall control unit, such as a milking system computer.

In embodiments, the control unit is arranged to bring the sampling system in the active state after a predetermined number, preferably at least two, of pump strokes during the pumping of the milk from said milking. Herein, the "active state" is a state in which the sampling system acquires a milk sample from the milk line, e.g. requiring the sample pump to pump and, if present, the controllable valve (or sample valve) to (be) open. This embodiment is useful when requiring the milk to be sufficiently pure and free from unwanted admixtures, such as milk from a previous milking. If the milk from a first pump stroke, or from the first predetermined number of pump strokes, is allowed to pass, said milk will have flushed the milk line/sample line before the actual sample is going to be taken. This improves the accuracy of the sampling system. Note that the case wherein one pump stroke suffices is already disclosed in the earlier embodiments of the invention.

Alternatively or additionally, the control unit is arranged to bring the sampling system in the active state after at least a first predetermined number of pump strokes for taking a first partial sample, and after at least a second predetermined number of pump strokes, higher than the first predetermined number, for taking a second partial sample, in each case during the pumping of the milk from said milking. In such embodiments, a sample is not taken in one go, during one rest stroke. Rather, the sample is a collective sample from more different pump strokes, taken during a number of subsequent rest strokes. An advantage hereof is that the sample is more representative for the whole of the milk of the milking, since it is possible that the composition is not constant over all pump strokes. An example is the fat content of milk, which is higher for milk that is milked later during the milking. This embodiment is also useful if the milk of the milking is already partially pumped away by means of one or more pump strokes before the end of the milking. This could be the case e.g. if the container is smaller than the amount of milk to be expected. In that case, it is impossible to mix all of the milk of the milking in the container. For a more reliable sampling, a number of partial samples may then be taken with the present embodiment.

According to the present invention, the milk pump comprises a positive displacement pump arranged to be operable to pump by alternating between a pump stroke and a rest stroke. Such a pump is not particularly limited. However, the milk pump advantageously comprises a diaphragm pump. Such a pump offers an advantage in that it allows very clean pumping, as the only parts that need come in contact with the milk are the diaphragm and, if any, inlet and outlet valves. It is therefore very easy to clean. It also provides a very gentle milk transport, which is advantageous due to a lower amount of free fatty acids due to mechanical load on the milk. However, other types of milk pump, still in accordance with the invention, are not excluded, such as a piston pump or a plunger pump.

It is remarked that GB 1543861 discloses sampling of milk in combination with a diaphragm pump as a milk pump. However, this document does not disclose the use of a sample pump or any other means for actively taking a representative sample. Therefore, the problem solved by the present invention is not present in said prior art document. Furthermore, the prior art document actually discloses to sample during a pump stroke, thereby teaching away from the present invention.

In embodiments, the sample pump comprises a peristaltic pump or roller pump. Such a type of pump offers an advantage that there are no moving parts in the line, and the milk contacts only the inside of the tubing of the sample pump. Thus there is no concern for valves, rings or seals that might become soiled, or give off contamination into the sample. In other words, cross-contamination with exposed pump components apart from the tubing can not occur. Furthermore, such a pump is also able to close the tubing when pumping, and can thus also act as a valve. It is also useful as a pump for accurately displacing small quantities. Nevertheless, other types of sample pump are not to be excluded, such as piston pumps or diaphragm pumps.

The invention also relates to a milking system according to claim 9, comprising a central milk line and a plurality of milking stations, each of said milking stations comprising a milking means, a milk container operatively connected to the milking means, a milk line operatively connected between the milk container and the central milk line, and a milk pump operatively connected to the milk container, the milking system further comprising a sampling system, the sampling system operatively connected to the central milk line via a sample line and comprising a sampling pump and a milk analysis device, wherein each milking means is arranged to extract milk from a dairy animal in a milking and store milk from said milking temporarily in its milk container, wherein each milk pump is arranged to pump the milk from said milking from said milk container via the milk line to the central milk line, wherein at least one, and preferably each, milk pump comprises a positive displacement pump arranged to be operable to pump the milk from said milking by alternating between a pump stroke and a rest stroke, wherein the sampling system is arranged to be or be brought in an active state for acquiring via the sample line a milk sample of the milk in the central milk line during at least a part of a period of time in which all of the milk pumps are either off or in a rest stroke during the pumping of the milk of said milking, and is arranged to be or be brought in a resting state for not acquiring a milk sample from the central milk line during substantially the full length of all pump strokes of any milk pump. This milking system has an advantage in that it is able to use only a single sampling system for a plurality of milking stations. It is only to be ensured that no milk pump is exerting a pump stroke during the sampling system being actively sampling. Of course, one or more milk pumps may be in an off-state, while another milk pump may be in a rest stroke. Note that it is also possible to connect the sampling system via a respective sample line to each of the milk lines before the respective milk pumps, or after the milk pumps but before the connection with the central milk line. This ensures that only milk from the respective milk pump reaches the sampling system. For milking systems with a relatively small number of milking stations/milking machines, such as two or three, this is useful possibility. However, for large systems, say with ten or more milking stations/milking machines, this adds a lot of complexity.

It is explicitly remarked here that each of the particular features, described in the dependent claims 2-8, are applicable to this milking system as weel, and may thus be combined therewith.

In particular embodiments, the milking system further comprises a control unit arranged to control the sampling system, wherein the control unit is arranged to bring the sampling system in the active state after a predetermined milk station dependent number, preferably at least two, of pump strokes during the pumping of the milk from said milking from said milking station. In this embodiment, a different distance between a respective milk pump and the sampling system is taken into account. For a milk pump that is further away may require more pump strokes before the milk from that milk pump passes the connection with the sample line in a state that is sufficiently free from admixture from milk from other, previous milkings. The pump strokes before the required number of pump strokes then serve to clean the part of the central milk line between the respective milk pump and the sample line by flushing with the first milk. Note that the case in which one pump stroke suffices is covered by the main embodiment.

The invention will now be elucidated, only for better understanding of the invention, by means of a number of non-limiting embodiments shown in the appended drawings, in which:
Fig. 1 diagrammatically shows a milking system with a sampling system according to the invention,
Fig. 2 shows an alternative embodiment of the milking system with a sampling system according to the invention,
Fig. 3 diagrammatically shows another embodiment of the milking system with the sampling system according to the invention, and
Fig. 4 diagrammatically shows the operation of the milking system milk sampling system according the invention.

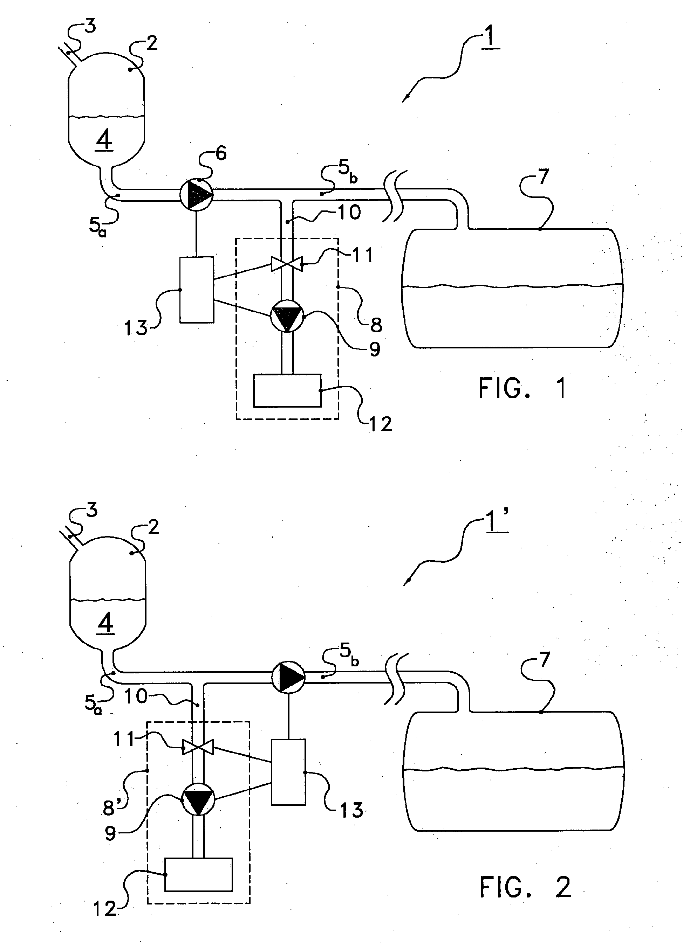

Fig. 1 diagrammatically shows a milking system with a sampling system according to the invention.

The milking system is generally designated with the reference numeral 1, and comprises a milk container 2, that is connected to a non-shown milking machine via machine milk line 3 and contains milk 4. The milk container 2 is connected via a first part 5a and a second part 5b of a milk line to a milk tank 7. A milk pump 6 pumps the milk 4 from the milk container 2 to the milk tank 7.

The milking system 1 further comprises a sampling system generally designated 8. A sample pump 9 can pump a sample portion of the milk from the milk line 5b via sample line 10 to the analyzing unit 12. There is optionally provided a sample valve 11. The milk pump 6 and the sampling system 8, more in particular the sample pump 9 and/or the sample valve 11, are controlled by control unit 13.

As described above, the milk container 2 is connected to (non-shown) milking means that are arranged to extract milk from a dairy animal. Such a milking machine may be a conventional milking machine or a robotic, fully-automatic milking machine. When a dairy animal is milked with the milking machine, the milk is collected and temporarily stored in the milk container 2. It is possible to store all the milk 4 of a milking in the milk container 2 and to empty the milk container at the end of the milking. It is also possible to start emptying the milk container 2 as soon as a certain amount of milk 4 has been collected. The latter option may be useful if a milk container 2 is provided that has a capacity which is lower than the amount of milk to be expected in a single milking.

The emptying of the milk container 2 is effected by means of the milk pump 6, which pumps the milk 4 via the first 5a and second 5b part of the milk line to a milk tank 7. The milk tank 7 is an optional part of the milking system 1, as it is also possible to feed the milk directly to animals, or collect the milk directly in a dairy truck. However, in most cases, a milking system will comprise such a milk tank.

According to the invention, the milk pump 6 is a positive displacement pump, that traps a substantially fixed amount of milk and displaces the trapped amount towards the milk tank 7. In doing so, the milk pump 6 operates by alternating a pump stroke and a rest stroke. During a pump stroke, the second part 5b of the milk line is pressurized while the pump is effectively disconnected from the first part 5a of the milk line. During the rest stroke, the milk pump 6 is effectively disconnected from the second part 5b of the milk line, while milk is allowed to enter the milk pump 6 from the first part 5a of the milk line, either by an exerted vacuum or by e.g. gravity. This means that the second part 5b of the milk line is pressurized substantially only during the pump stroke, and not during the rest stroke. Examples of such a positive displacement pump are a piston pump, a plunger pump and in particular a diaphragm pump (or bladder pump). In each case, such a pump comprises a cavity to be filled with milk, which cavity is emptied after filling, by the movement of a piston, a plunger, or the diaphragm, respectively. In particular a diaphragm pump is advantageous for milk transport, since it allows a very gentle transport of the milk and furthermore is very easy to clean as the only parts that come into contact with the milk are the diaphragm and the entry and exit valves. This pump does not require critical seals.

The sampling system 8 serves to collect a milk sample from the milk 4 of a milking. Preferably, such a milk sample is a representative sample of the milk of an animal, while the identity of the animal should be connected, e.g. stored, to the sample itself. The sampling system 8 pumps a sample portion of the milk 4 to an analyzing unit 12. Preferably, the sample pump 9 of the sampling system 8 should always work under similar conditions to guarantee correct operation of the sampling system 8. Since the pressure in the second part 5b of the milk line may vary during the pump stroke, and certainly when compared to the rest stroke, it should not be possible for the sampling system 8 to obtain a milk sample during a pump stroke. Thereto, the control unit 13 controls the sampling system 8 such that the sampling pump is in an active state during at least a part of one or more rest strokes during the pumping of the milk of the milking, and in a rest state during substantially the full length of all pump strokes during the pumping of the milk of the milking. In other words, the sampling pump is arranged to be in an active state only during at least a part of one or more rest strokes during the pumping of the milk of the milking. In this way, it may be guaranteed that the sampling system only collects a milk sample during one or more rest strokes. During such rest strokes, the second part of the milk line i.e. the part from which the milk sample is to be taken, is in principle pressureless. Thus, the sampling system 8 always works under the same conditions.

As a sample pump 9, it is possible to use substantially any kind of pump. In particular, however, the sample pump 9 is a peristaltic pump or roller pump. Such pumps are advantageously used because cross-contamination with exposed pump components can not occur. A simple way to control the sampling system 8 to be in an active state only during one or more rest strokes is to have the control unit 13 control the sample pump 9 to be active, i.e. in a sample acquiring or pumping state, only during the rest stroke(s). Alternatively or additionally, the sampling system 8 may comprise a sample valve 11 under the control of control unit 13. This sample valve 11 may be controlled to be closed during pump strokes and open during at least those one or more rest strokes during which a sample is being taken. Having such a controllable valve allows the use of a sample pump which is less able to withstand the pressure of a pump stroke even when said sample pump is not pumping. For example, a peristaltic pump as the sample pump might require special measures to withstand a pressure of about 3 bar during each pump stroke of the milk pump. By having a controllable sample valve, it is possible to use a peristaltic pump, or any other pump, that need not be able to withstand such high pressures. The sample pump may thus be of a simpler and cheaper design.

Fig. 2 shows an alternative embodiment of the milking system with a sampling system according to the invention. Herein, similar parts are designated with the same reference numerals.

The milking system 1' now has a sampling system 8' that is operatively connected to the first part 5a of the milk line. In this case, the sampling system 8' should be in an active state only during at least a part of one or more pump strokes, because the milk pump 6 will cause a non-atmospheric and varying pressure during the rest stroke that fills the milk pump 6. Again, the optional valve 11 may close off sample line 10 during the rest stroke and/or the sample pump 9 may be in a rest state during the rest stroke of the milk pump 6. All other aspects and features are the same as for fig. 1.

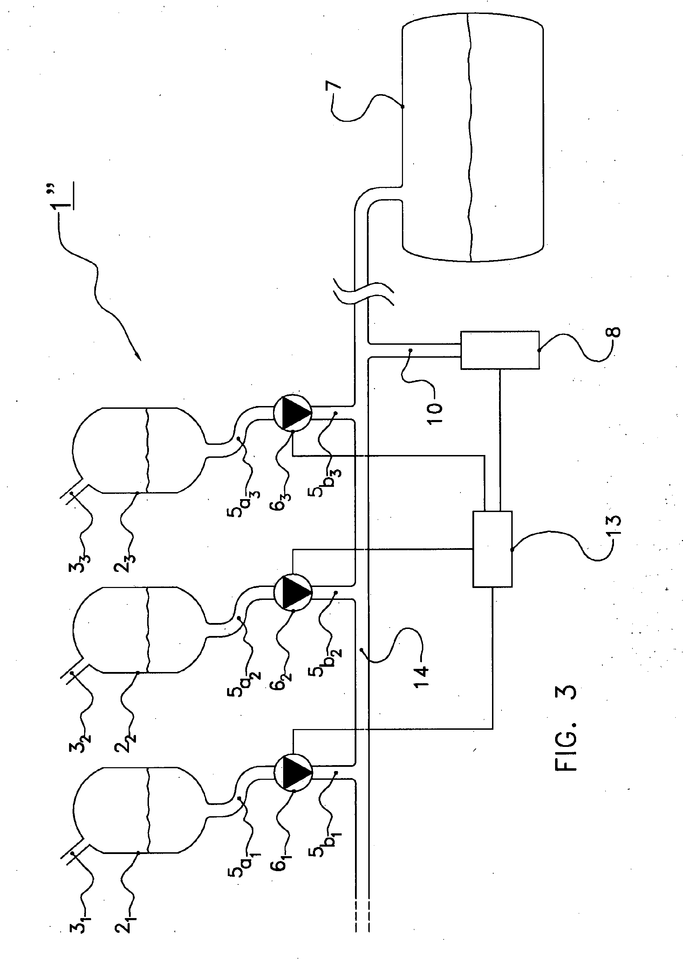

Fig. 3 diagrammatically shows another embodiment of the milking system with the sampling system according to the invention. In this milking system 1" there are provided 3 milking stations, each with a milking machine (not shown) and furthermore similar parts as for the milking system of fig. 1. In this case, however, each of the second parts of the milk line, 5b1, 5b2, 5b3, are connected to a central milk line 14, which in turn is connected to the milk tank 7. The sampling system 8 is connected to the central milk line 14 via the sample line 10. Each of the milk pumps 6₁, 6₂, 6₃ and the sampling system 8 are controlled by the control unit 13.

In this embodiment, the control unit 13 controls sampling system 8 to be in an active state only when each of the milk pumps 6₁, 6₂, 6₃ are not in a state that pressurizes the central milk line. This means that each of the milk pumps is either in a rest stroke or in an off-state. It is to be noted that in the present system 1", the pressures within the central milk line, and thus in the sample line 10, may vary even more than in a milking system with only one milk pump 6. For example, if no sample has to be taken, and the 3 milk pumps 6 are pumping at the same time, the total pressure in the central milk line 14 may be higher than when only one milk pump 6 would be pumping milk. Furthermore, in this embodiment, the single sampling system 8 is operable for each of the plurality of milking machines, which means that a lot of costs may be saved.

Particularly, it is noted that the distance from the first milk pump 6₁ to the sample line 10 is larger than the distance from the third milk pump 6₃ to the sample line 10. This means that it might require more pump strokes of the respective milk pump 6₁ before its milk has reached the sample line 10 than for the milk pump 6₃. In order to ensure that the milk that is collected by the sampling system 8 is sufficiently pure, control unit 13 may be provided with a look-up table or similar information, which contains a predefined milking station dependent number relating to a required or desired number of pump strokes for the respective milk pumps 6₁, 6₂, 6₃. In such a case, the control unit 13 will not put the sampling system 8 in an active state before at least the predefined number of pump strokes has been given by the milk pump for which a milk sample has to be taken.

Although the above milking system 1" has been described as comprising 3 milking stations or milking machines, any other plural number of milking stations/milking machines is also possible.

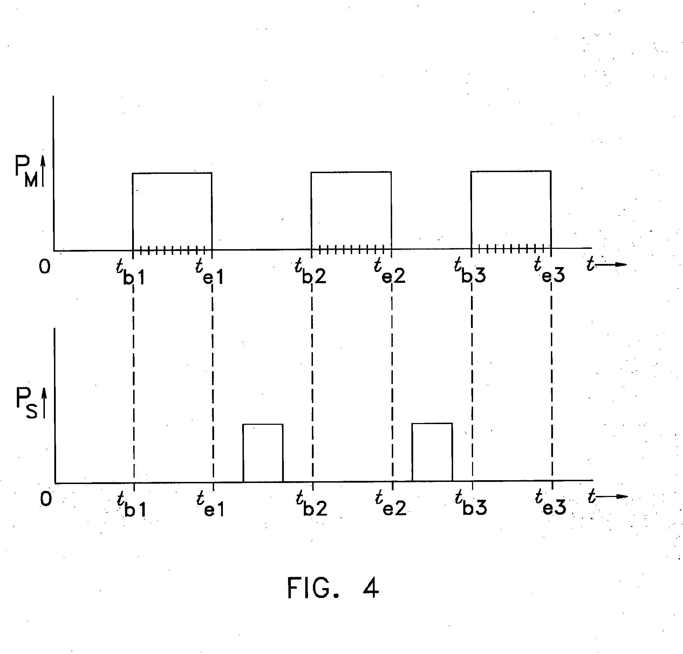

Fig. 4 diagrammatically shows the operation of a milking system with a milk sampling system according the invention. Fig. 4 shows two graphs, an upper graph depicting diagrammatically the pressure (or working) of the milk pump as a function of time, and the lower graph depicting diagrammatically the pressure (or working) of the sample pump as a function of time. The upper graph shows 3 pump strokes, running from t_{b1} to tₑ₁, from t_{b2} to tₑ₂, and from t_{b3} to tₑ₃ respectively. A typical duration could be 5 seconds for each pump stroke and 7 seconds for each rest stroke. Of course, such durations are strongly dependent on pump size and pump power, and other durations are not excluded.

Although the pressure signal has been indicated as a square 'wave', in practice, the pressure will show a more rounded-off character. For the purpose of the present invention, however, it is assumed that the pressure is either low (zero) or high. The other time periods, i.e. the time until t_{b1}, the time from tₑ₁ to t_{b2}, the time from tₑ₂ to t_{b3}, the time from tₑ₃ etc. may be designated as rest strokes. However, it is to be noted that time t_{b1} could be the first pump stroke. In that case, the time until, t_{b1} is not a true rest stroke but simply an off-state of the respective milk pump. Similarly, if there would be only 3 pump strokes during the pumping away of the milk of this particular milking, the time after tₑ₃ would neither be a true rest stroke. It could simply be an off-state. Although sampling during the off-state after the last pump stroke is not to be excluded in the present invention, the particular advantages, e.g. of more speedy collecting a milk sample, of the present invention do not relate to sampling during a true off-state of the milk pump.

The lower graph represents the pressure (or working) of the sample pump. This pressure represents the state of the pump, i.e. a positive, non-zero pressure means an active state, while a zero pressure means an off-state or resting state. In this case, two sample pump actions are shown, one during the rest stroke after the first pump stroke, in particular somewhere between tₑ₁ and t_{b2} and one during the rest stroke between the second and the third pump stroke, in particular somewhere between tₑ₂ and t_{b3}. In this situation, the sampling system 8, and in particular the sample pump 9 of the embodiment shown in fig. 1-3, will be protected against absolute high pressure, against pressure variations and will function under substantially constant conditions.

The following remarks are to be made here. The active state of the sampling system may run from the very end of a pump stroke, such as time tₑ₁, to the very beginning of a subsequent pump stroke, such as in this case time t_{b2}. Furthermore, the number of times that the sampling system is active is not limited to two, but may also be one or any other number of times. It is to be noted, however, that generally, this number will be at most equal to the number of pump strokes. In the case of a relatively long second part of a milk line, it may be desirable to have at least two pump strokes before the sampling system becomes active, because in that case sufficient milk for clean sampling may only have flown after said second pump stroke. For longer milk lines, a higher number of pump strokes may be desirable, such as in very long milk lines and/or milking systems with high numbers of milking machines/milking stations. Moreover, activating the sampling system need not be done as early as possible during the pumping away of the milk from the milking. It may also be desirable to activate the sampling system only after a desired number of pump strokes irrespective of the length of the milk line. This allows a sample to be taken from a desirable part of the milk, such as a last part. It is also possible to collect a total milk sample from a number of partial samples, by activating the sampling system a number of times, each time after a desired number of pump strokes. For example, it is possible to activate the sampling system after the first pump stroke, after the third pump stroke and after the fifth pump stroke (if available). If the total number of pump strokes would be five, this ensures that the total sample is taken from a first part, a middle part and a last part of the milk. In that way, a more reliable sampling may be performed. This holds in particular if the milk from a milking is not collected as a whole before pumping said milk to a milk tank or otherwise, but if the milk from a milking is already at least partially pumped away before the end of the milking. For example, if the milk container is smaller than the expected amount of milk of the milking, the milk pump may already pump away milk from that milking. The control unit may then already activate the sampling system to take a sample. Then, when later on during said milking the milk pump makes another pump stroke, the control unit may again activate the sampling system after said subsequent pump stroke to take another partial sample, and so on. In this way, a temporally mixed sample may be obtained. This may for example be important if the sampling system is arranged to determine a fat content of the milk, because the fat content of the milk changes during milking.

The embodiments shown and described are only provided in order to provide a better understanding of the invention. They are in no way deemed to be limiting, the scope of the invention being determined by the dependent claims.

## Claims

1. Milking system (1), comprising a milking means, a milk container (2) operatively connected to the milking means via a milk line (3) , a milk pump (6) operatively connected to the milk container (2),
wherein the milking means is arranged to extract milk (4) from a dairy animal in a milking and store milk from said milking temporarily in the milk container (2),
wherein the milk pump (6) is arranged to pump the milk (4) from said milking from the milk container (2) through a first part (5a) and a second part (5b) of a milk line, e.g. to a milk tank (7),
a sampling system (8) operatively connected to the milk line (5a or 5b) via a sample line (10) and comprising a sampling pump (9) and a milk analysis device (12),
wherein the milk pump (6) comprises a positive displacement pump arranged to be operable to pump the milk (4) from said milking by alternating between a pump stroke and a rest stroke,
wherein the sampling system (8) is arranged to be or be brought in an active state for acquiring via the sample line (10) a milk sample of the milk (4) from said milking during at least a part of one or more rest strokes during the pumping of the milk (4) of said milking, and to be or be brought in a resting state for not acquiring a milk sample of the milk (4) from said milking during substantially the full length of all pump strokes during the pumping of the milk (4) of said milking.

2. Milking system (1) according to claim 1, wherein the sample line (10) is connected to the milk line (3) downstream of the milk pump (6).

3. Milking system (1) according to any preceding claim, wherein the sample pump (9) is arranged to be or be brought in a rest state during substantially the full length of all pump strokes during the pumping of the milk (4) of said milking, and to be or be brought in a pumping state during at least a part of one or more rest strokes during the pumping of the milk (4) of said milking.

4. Milking system (1) according to any preceding claim, wherein the sampling system (8) comprises a controllable valve provided in the sample line (10) between the milk line (3) and the sample pump (9), and arranged to be or be brought in a closed state, that closes off the sample line (10), during substantially the full length of all pump strokes during the pumping of the milk (4) of said milking, and to be or be brought in an open state, that leaves open the sample line (10), during at least a part of one or more rest strokes during the pumping of the milk (4) of said milking.

5. Milking system (1) according to any preceding claim, further comprising a control unit (13) for controlling the sampling system (8) as a whole, in particular the sample pump (9) and/or the sample valve (11).

6. Milking system (1) according to any preceding claim, wherein the control unit (13) is arranged to bring the sampling system (8) in the active state after a predetermined number, preferably at least two, of pump strokes during the pumping of the milk (4) from said milking.

7. Milking system (1) according to any preceding claim, wherein the control unit (13) is arranged to bring the sampling system (8) in the active state after at least a first predetermined number of pump strokes for taking a first partial sample, and after at least a second predetermined number of pump strokes, higher than the first predetermined number, for taking a second partial sample, in each case during the pumping of the milk (4) from said milking.

8. Milking system (1) according to any preceding claim, wherein the milk pump (6) comprises a diaphragm pump, and/or wherein the sample pump (9) comprises a peristaltic pump or roller pump.

9. Milking system (1"), comprising a central milk line (14) and a plurality of milking stations, each of said milking stations comprising
- a milking means,
- a milk container (2) operatively connected to the milking means,
- a milk line (5) operatively connected between the milk container (2) and the central milk line (14), and
- a milk pump (6) operatively connected to the milk container (2),
the milking system (1) further comprising a sampling system (8), the sampling system operatively connected to the central milk line (14) via a sample line (10) and comprising a sampling pump (9) and a milk analysis device (12),
wherein each milking means is arranged to extract milk (4) from a dairy animal in a milking and store milk (4) from said milking temporarily in its milk container (2), wherein each milk pump (6) is arranged to pump the milk (4) from said milking from said milk container (2) via the milk line (5) to the central milk line(14),
wherein at least one, and preferably each, milk pump (6) comprises a positive displacement pump arranged to be operable to pump the milk (4)from said milking by alternating between a pump stroke and a rest stroke,
wherein the sampling system (8) is arranged to be or be brought in an active state for acquiring via the sample line (10) a milk sample of the milk in the central milk line (14) during at least a part of a period of time in which all of the milk pumps are either off or in a rest stroke during the pumping of the milk (4) of said milking, and is arranged to be or be brought in a resting state for not acquiring a milk sample from the central milk line (14) during substantially the full length of all pump strokes of any milk pump.

10. Milking system (1) according to claim 9, further comprising a control unit (13) arranged to control the sampling system (8), wherein the control unit (13) is arranged to bring the sampling system (8) in the active state after a predetermined milk station dependent number, preferably at least two, of pump strokes during the pumping of the milk (4) from said milking from said milking station.

## Patentansprüche

1. Melksystem (1), umfassend ein Melkmittel, einen Milchbehälter (2), der betriebswirksam mit dem Melkmittel verbunden ist, eine Milchleitung (3), die über eine Milchpumpe (6) betriebswirksam mit dem Milchbehälter (2) verbunden ist,
wobei das Melkmittel zum Extrahieren von Milch (4) aus einem milchgebenden Tier durch Melken und vorübergehendes Speichern der Milch aus dem Melken in dem Milchbehälter (2) angeordnet ist,
wobei die Milchpumpe (6) zum Pumpen der Milch (4) aus dem Melken aus dem Milchbehälter (2) durch die Milchpumpe , z. B. zu einem Milchtank (7), einem ersten Teil (5a) und einem zweiten Teil (5b) eines Probeentnahmesystems (8), das betriebswirksam mit der Milchleitung über eine Probenleitung (10) verbunden ist, angeordnet ist und eine Probenentnahmepumpe (9) und eine Milchanalysevorrichtung (12) umfasst,
wobei die Milchpumpe (6) eine Verdrängungspumpe umfasst, die zum Pumpen der Milch (4) aus dem Melken durch Wechseln zwischen einem Pump- und Ruhehub betriebswirksam angeordnet ist,
wobei das Probenentnahmesystem (8) angeordnet ist, um in einem aktiven Zustand zu sein oder in diesen gebracht zu werden, um über die Probenleitung (10) eine Milchprobe der Milch (4) aus dem Melken während eines oder mehrerer Ruhehübe während des Pumpens von Milch (4) aus dem Melken zu erhalten, und um in einem Ruhezustand zu sein oder gebracht zu werden, um während einer im Wesentlichen vollständigen Länge aller Pumphübe während des Pumpen von Milch (4) aus dem Melken keine Milchprobe der Milch (4) aus dem Melken zu erhalten.

2. Melksystem (1) nach Anspruch 1, wobei die Probenleitung (10) mit der Milchleitung (3) stromabwärts der Milchpumpe (6) verbunden ist.

3. Melksystem (1) nach einem der vorhergehenden Ansprüche, wobei die Probenpumpe (9) angeordnet ist, um im Wesentlichen während der vollständigen Länge aller Pumphübe während des Pumpens der Milch (4) aus dem Melken in einem Ruhezustand zu sein oder gebracht zu werden, und um mindestens während eines Teils des einen oder der mehreren Ruhehübe während des Pumpens der Milch (4) aus dem Melken in einem Pumpzustand zu sein oder in diesen gebracht zu werden.

4. Melksystem (1) nach einem der vorhergehenden Ansprüche, wobei das Probenentnahmesystem (8) ein steuerbares Ventil umfasst, das in der Probenleitung (10) zwischen der Milchleitung (3) und der Probenpumpe (9) angeordnet ist, und angeordnet ist, um im Wesentlichen während der vollständigen Länge aller Pumphübe während des Pumpens der Milch (4) aus dem Melken in einem geschlossenen Zustand, der die Probenleitung (10) verschließt, zu sein oder gebracht zu werden, und um in einem offenen Zustand zu sein oder gebracht zu werden, der während mindestens eines Teils des einen oder mehreren Ruhehübe während des Pumpens der Milch (4) aus dem Melken die Probenleitung (10) geöffnet lässt.

5. Melksystem (1) nach einem der vorhergehenden Ansprüche, ferner umfassend eine Steuereinheit (13) zum Steuern des Probenentnahmesystems (8) als Ganzes, insbesondere der Probenpumpe (9) und/oder des Probenventils (11).

6. Melksystem (1) nach einem der vorhergehenden Ansprüche, wobei die Steuereinheit (13) angeordnet ist, um das Probenentnahmesystem (8) nach einer vorbestimmten Anzahl, vorzugsweise mindestens zwei, von Pumphüben während des Pumpens der Milch (4) aus dem Melken in den aktiven Zustand zu bringen.

7. Melksystem (1) nach einem der vorhergehenden Ansprüche, wobei die Steuereinheit (13) angeordnet ist, um das Probenentnahmesystem (8) nach mindestens einer ersten vorbestimmten Anzahl von Pumphüben zum Entnehmen einer ersten Teilprobe und nach mindestens einer zweiten vorbestimmten Anzahl von Pumphüben, die höher als die erste vorbestimmte Anzahl ist, in einen aktiven Zustand zu bringen, um eine zweite Teilprobe zu entnehmen, in jedem Fall jeweils während des Pumpens der Milch (4) aus dem Melken.

8. Melksystem (1) nach einem der vorhergehenden Ansprüche, wobei die Milchpumpe (6) eine Membranpumpe umfasst, und/oder wobei die Probenpumpe (9) eine Schlauchpumpe bzw. Rollenpumpe umfasst.

9. Melksystem (1), umfassend eine zentrale Milchleitung (14) und mehrere Melkstationen, wobei jede der Melkstationen umfasst:
- ein Melkmittel,
- einen Milchbehälter (2), der betriebswirksam mit dem Melkmittel verbunden ist,
- eine Milchleitung (5), die betriebswirksam zwischen dem Milchbehälter (2) und der zentralen Milchleitung (14) verbunden ist, und
- eine Milchpumpe (6), die betriebswirksam mit dem Milchbehälter (2) verbunden ist,
wobei das Melksystem (1) ferner ein Probenentnahmesystem (8) umfasst, wobei das Probenentnahmesystem betriebswirksam mit der zentralen Milchleitung (14) über eine Probenleitung (10) verbunden ist und eine Probenentnahmepumpe (9) und eine Milchanalysevorrichtung (12) umfasst,
wobei jedes Melkmittel angeordnet ist, um Milch (4) von einem milchgebenden Tier aus einem Melken zu extrahieren und die Milch (4) aus dem Melken vorübergehend in dem Milchbehälter (2) davon zu speichern, wobei jede Milchpumpe (6) angeordnet ist, um die Milch (4) aus dem Melken vom Milchbehälter (2) über die Milchleitung (5) zu der zentralen Milchleitung (14) zu pumpen,
wobei mindestens eine und vorzugsweise jede Milchpumpe (6) eine Verdrängungspumpe umfasst, die zum Pumpen der Milch (4) aus dem Melken durch Wechseln zwischen einem Pump- und Ruhehub betriebswirksam angeordnet wird,
wobei das Probenentnahmesystem (8) angeordnet ist, um in einem aktiven Zustand zu sein oder in diesen gebracht zu werden, um über die Probenleitung (10) eine Milchprobe der Milch in der zentralen Milchleitung (14) während mindestens eine Teils einer Zeitdauer zu halten, in der alle Milchpumpen entweder aus sind oder sich in einem Ruhehub während des Pumpens der Milch (4) aus dem Melken befinden und angeordnet ist, um in einem Ruhezustand zu sein oder gebracht zu werden, um keine Milchprobe aus der zentralen Milchleitung (14) während der im Wesentlichen vollständigen Länge aller Pumphübe aus den Milchpumpen zu erhalten.

10. Melksystem (1) nach Anspruch 9, ferner umfassend eine Steuereinheit (13), die zum Steuern des Probenentnahmesystems (8) angeordnet ist, wobei die Steuereinheit (13) angeordnet ist, um das Probenentnahmesystem (8) nach einer vorbestimmten melkstationabhängigen Anzahl, vorzugsweise mindestens zwei, von Pumphüben während des Pumpens der Milch (4) aus dem Melken von der Melkstation in den aktiven Zustand zu bringen.

## Revendications

1. Système de traite (1), comprenant un moyen de traite, un récipient de lait (2) connecté de façon opérationnelle au moyen de traite par l'intermédiaire d'une ligne de lait (3), une pompe à lait (6) connectée de façon opérationnelle au récipient de lait (2),
dans lequel le moyen de traite est agencé de manière à extraire du lait (4) d'un animal laitier lors d'une traite et à stocker le lait récolté lors de ladite traite temporairement dans le récipient de lait (2),
dans lequel la pompe à lait (6) est agencée de manière à pomper le lait (4) récolté lors de ladite traite hors du récipient de lait (2) à travers une première partie (5a) et une deuxième partie (5b) d'une ligne de lait, par exemple jusqu'à un réservoir de lait (7),
un système d'échantillonnage (8) qui est connecté de façon opérationnelle à la ligne de lait (5a ou 5b) par l'intermédiaire d'une ligne d'échantillon (10) et comprenant une pompe d'échantillonnage (9) et un dispositif d'analyse de lait (12),
dans lequel la pompe à lait (6) comprend une pompe à déplacement positif qui est agencée de manière à être actionnable pour pomper le lait (4) récolté lors de ladite traite en alternant entre une course de pompe et une course de repos, et
dans lequel le système d'échantillonnage (8) est agencé de manière à se trouver ou à être amené dans un état actif dans le but d'acquérir par l'intermédiaire de la ligne d'échantillon (10) un échantillon de lait du lait (4) récolté lors de ladite traite pendant au moins une partie d'une ou de plusieurs course(s) de repos pendant le pompage du lait (4) de ladite traite, et à se trouver ou à être amené dans un état de repos afin de ne pas acquérir un échantillon de lait du lait (4) récolté lors de ladite traite pendant sensiblement la totalité de la longueur de toutes les courses de pompe pendant le pompage du lait (4) de ladite traite.

2. Système de traite (1) selon la revendication 1, dans lequel la ligne d'échantillon (10) est connectée à la ligne de lait (3) en aval de la pompe à lait (6).

3. Système de traite (1) selon l'une quelconque des revendications précédentes, dans lequel la pompe d'échantillonnage (9) est agencée de manière à se trouver ou à être amenée dans un état de repos pendant sensiblement la totalité de la longueur de toutes les courses de pompe pendant le pompage du lait (4) de ladite traite, et à se trouver ou à être amenée dans un état de pompage pendant au moins une partie d'une ou de plusieurs course(s) de repos pendant le pompage du lait (4) de ladite traite.

4. Système de traite (1) selon l'une quelconque des revendications précédentes, dans lequel le système d'échantillonnage (8) comprend une soupape commandable prévue dans la ligne d'échantillon (10) entre la ligne de lait (3) et la pompe d'échantillonnage (9), et agencée de manière à se trouver ou à être amenée dans un état fermé, qui ferme la ligne d'échantillon (10), pendant sensiblement la totalité de la longueur de toutes les courses de pompe pendant le pompage du lait (4) de ladite traite, et à se trouver ou à être amenée dans un état ouvert, qui laisse la ligne d'échantillon (10) ouverte pendant au moins une partie d'une ou de plusieurs course(s) de repos pendant le pompage du lait (4) de ladite traite.

5. Système de traite (1) selon l'une quelconque des revendications précédentes, comprenant en outre une unité de commande (13) pour commander le système d'échantillonnage (8) dans son ensemble, en particulier la pompe d'échantillonnage (9) et/ou la soupape d'échantillonnage (11).

6. Système de traite (1) selon l'une quelconque des revendications précédentes, dans lequel l'unité de commande (13) est agencée de manière à amener le système d'échantillonnage (8) dans l'état actif après un nombre prédéterminé, de préférence au moins deux, de courses de pompe pendant le pompage du lait (4) récolté lors de ladite traite.

7. Système de traite (1) selon l'une quelconque des revendications précédentes, dans lequel l'unité de commande (13) est agencée de manière à amener le système d'échantillonnage (8) dans l'état actif après au moins un premier nombre prédéterminé de courses de pompe pour prélever un premier échantillon partiel, et après au moins un deuxième nombre prédéterminé de courses de pompe, supérieur au premier nombre prédéterminé, pour prélever un deuxième échantillon partiel, dans chaque cas pendant le pompage du lait (4) récolté lors de ladite traite.

8. Système de traite (1) selon l'une quelconque des revendications précédentes, dans lequel la pompe à lait (6) comprend une pompe à diaphragme, et/ou dans lequel la pompe d'échantillonnage (9) comprend une pompe péristaltique ou une pompe à galet.

9. Système de traite (1") comprenant une ligne de lait centrale (14) et une pluralité de stations de traite, chacune desdits stations de traite comprenant:
un moyen de traite,
un récipient de lait (2) connecté de façon opérationnelle au moyen de traite,
une ligne de lait (5) connectée de façon opérationnelle entre le récipient de lait (2) et la ligne de lait centrale (14), et
une pompe à lait (6) connectée de façon opérationnelle au récipient de lait (2),
le système de traite (1) comprenant en outre un système d'échantillonnage (8), le système d'échantillonnage étant connecté de façon opérationnelle à la ligne de lait centrale (14) par l'intermédiaire d'une ligne d'échantillon (10), et comprenant une pompe d'échantillonnage (9) et un dispositif d'analyse de lait (12),
dans lequel chaque moyen de traite est agencé de manière à extraire du lait (4) d'un animal laitier lors d'une traite et à stocker le lait (4) récolté lors de ladite traite temporairement dans son récipient de lait (2),
dans lequel chaque pompe à lait (6) est agencée de manière à pomper le lait (4) récolté lors de ladite traite à partir dudit récipient de lait (2) par l'intermédiaire de la ligne de lait (5) jusqu'à la ligne de lait centrale (14),
dans lequel au moins une, et de préférence chaque pompe à lait (6) comprend une pompe à déplacement positif qui est agencée de manière à être actionnable pour pomper le lait (4) récolté lors de ladite traite en alternant entre une course de pompe et une course de repos, et
dans lequel le système d'échantillonnage (8) est agencé de manière à se trouver ou à être amené dans un état actif dans le but d'acquérir par l'intermédiaire de la ligne d'échantillon (10) un échantillon de lait du lait dans la ligne de lait centrale (14) pendant au moins une partie d'une période de temps pendant laquelle la totalité des pompes à lait sont soit coupées soit dans une course de repos pendant le pompage du lait (4) de ladite traite, et est agencé de manière à se trouver ou à être amené dans un état de repos afin de ne pas acquérir un échantillon de lait à partir de la ligne de lait centrale (14) pendant sensiblement la totalité de la longueur de toutes les courses de pompe de n'importe quelle pompe à lait.

10. Système de traite (1) selon la revendication 9, comprenant en outre une unité de commande (13) agencée de manière à commander le système d'échantillonnage (8), dans lequel l'unité de commande (13) est agencée de manière à amener le système d'échantillonnage (8) dans l'état actif après un nombre prédéterminé dépendant de la station de traite, de préférence au moins deux, de courses de pompe pendant le pompage du lait (4) récolté lors de ladite traite à partir de ladite station de traite.
